Europäisches Patentamt

European Patent Office

Office européen des brevets

(19)

(11) **EP 0 900 248 B1**

(12) **EUROPÄISCHE PATENTSCHRIFT**

(45) Veröffentlichungstag und Bekanntmachung des Hinweises auf die Patenterteilung:
**12.12.2001 Patentblatt 2001/50**

(21) Anmeldenummer: **97917985.0**

(22) Anmeldetag: **14.05.1997**

(51) Int Cl.$^7$: **C08J 3/20**, C08J 3/22

(86) Internationale Anmeldenummer:
**PCT/CH97/00189**

(87) Internationale Veröffentlichungsnummer:
**WO 97/44378 (27.11.1997 Gazette 1997/51)**

(54) **VERFAHREN ZUR HERSTELLUNG VON WÄRME-UND LICHTBESTÄNDIGEN MULTIFILAMENTEN, MONOFILAMENTEN UND FLOCK AUS POLYESTER**

METHOD OF MANUFACTURING HEAT AND LIGHT RESISTANT POLYESTER MULTIFILAMENTS, MONOFILAMENTS AND FLOCK

PROCEDE DE FABRICATION DE MULTIFILAMENTS, MONOFILAMENTS ET FLOCS DE POLYESTER DE STABILITE A LA CHALEUR ET A LA LUMIERE AMELIOREE

(84) Benannte Vertragsstaaten:
**CH DE FR GB LI NL PT**

(30) Priorität: **23.05.1996 CH 130496**

(43) Veröffentlichungstag der Anmeldung:
**10.03.1999 Patentblatt 1999/10**

(73) Patentinhaber: **Rhodia Industrial Yarns AG 6021 Emmenbrücke (CH)**

(72) Erfinder:
- **ENGGASSER, Josiane**
  **CH-6020 Emmenbrücke (CH)**
- **VOGT, Werner**
  **D-6204 Sempach (CH)**

(74) Vertreter: **Herrmann, Peter Johannes, Dr. Rhodia Filtec AG Patentabteilung MP 6021 Emmenbrücke (CH)**

(56) Entgegenhaltungen:
**CH-A- 606 198          GB-A- 2 025 842
US-A- 4 399 265**

- **RESEARCH DISCLOSURE, Bd. 275, Nr. 064, März 1987, HAVANT GB, Seite 170 XP000048503 CIBA-GEIGY: "Production of polyester masterbatches for mass coloration of poyester"**

**Beschreibung**

Die vorliegende Erfindung betrifft ein Verfahren zur Herstellung wärme -und Lichtbeständigen Multifilamenten Monofilamenten und Flock für textile und industrielle Anwendungen.

Aus Umweltschutzgründen und für Einsatzgebiete, wo grosse Fadenlängen und grosse Fadenmengen mit konstanter Farbegalität und guter Lichtechtheit bei thermoplastischen Filamenten gefordert werden, hat sich das sogenannte Spinnfärbeverfahren erfolgreich durchgesetzt (DE-C-2 708 789). Zur Anwendung kamen vorwiegend polymerlösliche, thermostabile organische Farbstoffe mit mehr oder weniger guten Lichtechtheiten. Mit der ständig wachsenden Anforderung nach besseren Lichtechtheiten, beispielsweise im Automobil-Sektor, wo das gefärbte Fasermaterial neben dem Lichteinfluss gleichzeitig enormer Wärmeeinwirkung ausgesetzt ist, werden zunehmend organische und anorganische Pigmente eingesetzt. Da die Farbstoffpalette der für die Spinnfärbung brauchbaren Pigmente nach wie vor recht bescheiden ist, ist es unumgänglich, weiterhin polymerlösliche Farbstoffe einzusetzen. Weil es sich bei diesen Farbstoffkomponenten vorwiegend um sogenannte Nuançier-Farbstoffe handelt, tritt unter extremer Licht- und Wärmeeinwirkung neben dem üblichen Ausbleichen der noch gravierendere Mangel einer Farbverschiebung auf. Um das spinngefärbte Fasermaterial vor UV-Strahlung erfolgreich zu schützen, müssen zusätzlich sogenannte UV-Absorber eingesetzt werden.

Als besonders nachteilig hat sich jedoch die verfahrenstechnische Applikation dieser Additive erwiesen, insbesondere wegen ihrer Sublimationsneigung und wegen ihres tiefen Schmelzpunktes von weniger als 180°C. Somit sind konventionelle Aufpuderverfahren wie z.B. im Doppelkonustrockner oder Taumler bei gleichzeitiger Trocknung unter Hochvakuum bei Temperaturen über 150 °C ausgeschlossen, wegen Additivverlust und Verschmutzung der Evakuieraggregate, sowie Verbackung der Granulat/Additiv-Schüttung. Eine kontinuierliche Zudosierung des Additivs in moderne, integrierte und effizientere Spinnanlagen, d.h. Zugabe direkt vor dem Extruder in das heisse Granulat ab kontinuierlichem Trockner, ist wegen der bekannten Probleme, wie Versinterung, Verstopfung der Granulatleitung und Brückenbildung nicht durchführbar. Selbst eine Zugabe in das kalte Granulat verschiebt die Probleme lediglich in den Aufschmelzbereich des Extruders, wo Einzugsstörungen und Nichtbeherrschen der Druck/Drehzahl-Regelung wegen vorzeitigem Aufschmelzen des Additivs eine einwandfreie und sichere Produktion verunmöglicht.

Die Herstellung eines gefärbten Polyester-Masterbatch für die Massefärbung ist auch aus Research Disclosure Bd. 275, Nr. 064, März 1987, Havant GB, S. 170 XP 000 048 503 ist bekannt . Die Zugabe eines Additivs in Form eines UV-Absorbers ist nicht vorgesehen. Die Zugabe eines zusätzlichen Additivs hat bekannterweise den Nachteil, dass die Reisskraft negativ beeinflusst wird, was für Stapelfasern nicht von Bedeutung ist, jedoch für die Herstellung von Filamenten und Flock ein wesentliches Qualitätsmerkmal darstellt.

Die GB-A-2 025 842 betrifft die Zumischung von UV-Stabilisatoren zu Polyestern von 0.1 bis 3 Gew.-% genannt. Es wird eine Schmelzmischung (melt-blending) hergestellt, welche zwangsläufig eine hohe Temperatur besitzt oder eine Mischung durch Aufbringen auf die Oberfläche des Polyesters durch Aufpudern. Das Schmelzmischen erfolgt in einem getrennten Arbeitsgang vor dem Extrudieren. Das Verfahren ist in allen Beispielen auf die Herstellung von Filmen mit UV- Stabilisatoren in einer Menge von 0.6 % durchgeführt. Das Verfahren ist im besten Fall für Stapelfasern geeignet.

Die CH-A-606 198 betrifft die Herstellung von gefärbten Polyestergranulaten für Stapelfasern, allerdings sind in der Mischung sehr hohe Pigmentmengen von 0.5-35 Gew.-% und keine UV-Absorber vorhanden. Ein grosser Nachteil des bekannten Verfahrens liegt in dem zusätzlich erforderlichen Verfahrensschritt der Filtration der geschmolzenen Farbdispersion, welche das Verfahren technisch sehr aufwendig und damit unwirtschaftlich macht.

Es ist auch bekannt, Farbstoffpräparate direkt in den Polyester-Schmelzestrom, kurz vor der Spinndüse zu injizieren (Chemiefaser/Textil-Industrie, 1978, S. 1048/49), dabei muss ein Trägermedium gewählt werden, das bei der Temperatur von geschmolzenem Polyester flüssig und mit letzterem völlig verträglich sein muss.

Aufgabe der vorliegenden Erfindung ist es, ein Verfahren zur Herstellung von wärme-und Lichtbeständigen Multifilamenten, Monofilamenten und Flock aus Polyester zur Verfügung zu stellen, das die aufgezählten Mängel nicht aufweist.

Diese Aufgabe wird erfindunggemäss nach dem Kennzeichen von Anspruch 1 gelöst.

Es hat sich als zweckmässig erwiesen, Färbemittel und UV-Absorber, je nach gewünschtem Verdünnungsgrad, mit dem gegebenen Substrat in Pulverform kalt zu mischen. Diese Dosiermischung wird dann nicht direkt in einen Spinnextruder, sondern in einen Compoundier-Doppel-schneckenextruder zudosiert, aufgeschmolzen, geknetet, homogenisiert, und die im Wasserbad abgekühlten Farbstränge werden zu einem Compound-Granulat geschnitten. Die Extruder-Einzugszone wird dabei vorzugsweise nicht beheizt. Da nun der UV-Absorber im Substrat eingebunden ist, sind die additivbedingten Verfahrensprobleme gelöst. Das vorliegende Compound kann nun auf jeder geeigneten Anlage problemlos schmelzgesponnen werden.

Als Färbemittel kommen solche in Frage, die einen Schmelzpunkt von > 180°C aufweisen. Als besonders geeignet haben sich Färbemittel wie Perinon- und Anthrachinonfarbstoffe, organische und anorganische Pigmente erwiesen.

Als UV-Absorber kommen handelsübliche UV-Absorber wie beispielsweise 2-(2H-benzotriazol-2-yl)-4,6-bis (1-methyl-1-phenyl)phenol in Frage. Diese Gruppe der UV-Absorber weist einen Schmelzpunkt im Bereich von 135-145°C auf. In Frage kommen auch weitere Additive wie Antioxidantien, sowie vorzugsweise Mischungen aus UV-Absorbern mit Antioxydantien.

Es hat sich in überraschender Weise gezeigt, dass die Zugabe eines UV-Absorbers in einer Konzentration von 0,1 - 5 %, vorzugsweise zwischen 0,1 - 1 %, insbesondere von 0,2 - 0,5 %, bezogen auf die fertige Polyesterfaser, die Lichtechtheiten (Lichtechtheit + Fakratest) des spinngefärbten Polyesters um mindestens 1,0 - 1,5 Noten erhöht, und der Reisskraftverlust um mindestens 50 % reduziert werden.

Die Fadenproben zur Bestimmung der Lichtbeständigkeit (Reisskraftverlust in %) wurden nach der Prüfvorschrift der Lichtechtheit, Norm SN-ISO 105 B02 belichtet, und der resultierende Reisskraftverlust in % wurde nach folgender Formel berechnet, wobei (RK) Reisskraft bedeutet:

$$\text{RK-verlust} = 100 - \frac{\text{RK nach Belichtung}}{\text{RK ohne UV-Absorber, vor Belichtung}} \times 100$$

Der FAKRA wurde nach DIN 75202 durchgeführt.

Die Erfindung soll anhand von Beispielen näher erläutert werden.

Beispiel 1

Es wurde ein Polyester, bestehend aus wenigsten 85 Gew.-% Polyethylenterephthalateinheiten und 0,05 Gew.-% $TiO_2$, sowie variierendem Anteil an UV-Absorber hergestellt. Der UV-Absorber wurde mit dem Polyesterpulver kalt vermischt und compoundiert. Das erhaltene Compound wurde nach bekannten Verfahren versponnen. Die Versuchsergebnisse sind in Tabelle 1 für ungefärbte Polyesterfilamente angegeben. Die Mengenangaben erfolgen in Gew.-%.

Tabelle 1

| Vers. Nr. | % UV-Absorber | Reisskraftverlust in % |
|---|---|---|
| 1 | 0 | 14 |
| 2 | 0,1 | 15 |
| 3 | 0,2 | 9 |
| 4 | 0,3 | 7 |
| 5 | 0,5 | 6 |

Aus den Versuchen Nr. 1-5 ist ersichtlich, dass der Reisskraftverlust mit zunehmender Menge an UV-Absorber abnimmt.

Beispiel 2

In diesem Beispiel wurde dieselbe Versuchsreihe wie in Beispiel 1 durchgeführt mit der Ausnahme, dass zusätzlich 0,3 Gew.-% des Farbstoffs "Estofil Grün S-3GL" (Markenzeichen der Firma CLARIANT, Huningue, Frankreich) zugesetzt wurde. Die Versuchsergebnisse sind in Tabelle 2 für gefärbte Polyesterfilamente angegeben.

Tabelle 2

| Vers. Nr. % | UV-Absorber | LE * | FAK ** | Reisskraftverlust in % |
|---|---|---|---|---|
| 6 | 0 | 4 | 4 | 12 |
| 7 | 0,1 | 5 | 5 | 17 |
| 8 | 0,2 | 5- | 5 | 6 |
| 9 | 0,3 | 5-6 | -6 | 6 |
| 10 | 0,5 | -6 | 6 | 11 |

\* LE = Lichtechtheit nach SN-ISO 105 B02

\*\* FAK = FAKRA nach DIN 75202

Die Versuche 6-10 zeigen, dass in überraschender Weise in Gegenwart eines Farbstoffs der Reisskraftverlust ein Minimum durchschreitet, und zwar bei einer Konzentration des UV-Absorbers zwischen 0,2 und 0,3 %.

Mit dem erfindungsgemässen Verfahren ist es erstmals gelungen, den Reisskraftverlust spinngefärbter Polyestergarne um etwa 50 %, gegenüber dem Stand der Technik zu reduzieren. Die Lichtechtheit konnte um mindestens 1 Note und der FAKRA um mindestens 1,5 Noten verbessert werden.

Das Verfahren ist in analoger Weise auch zur Herstellung von schmelzspinnbarem Polyamid-Granulatcompound geeignet.

Das erfindungsgemässe Polyester-Granulatcompound kann zur Herstellung von thermoplastischen Formteilen verwendet werden, die licht- und wärmestabil sein sollen.

## Patentansprüche

1.   Verfahren zur Herstellung von wärme- und lichtbeständigen Multifilamenten, Monofilamenten und Flock für textile und industrielle Anwendungen, enthaltend 0,2-0,5 Gew.-% eines UV-Absorbers, bezogen auf das fertige Filament, **dadurch gekennzeichnet, dass** der UV-Absorber gegebenenfalls zusammen mit einem Färbemittel in einem ersten Verfahrensschritt mit einem Polyesterpulver kalt gemischt und in einem zweiten Verfahrensschritt 1-100 Gew.-% dieser Mischung mit 0-99 Gew.-% PET-Granulat in die gekühlte Einzugszone eines Doppelschneckenextruders dosiert, aufgeschmolzen, geknetet, homogenisiert und die in einem Wasserbad abgekühlten Polymerstränge geschnitten werden, wodurch der UV-Absorber im Substrat eingebunden ist.

## Claims

1.   Process for the production of heat-stable and lightfast multifilaments, monofilaments and flock for textile and industrial applications, containing 0.2 - 0.5% by weight of a UV absorber, based on the finished filament, **characterized in that** the UV absorber, possibly together with a colorant, is mixed at room temperature with a polyester powder in a first process step and, in a second process step, 1-100% by weight of this mixture with 0-99% by weight of PET granules are metered into the cooled feed zone of a twin-screw extruder and said feed is melted, kneaded and homogenized, and the polymer strands cooled in a water bath are cut, as a result of which the UV absorber is incorporated in the substrate.

## Revendications

1.   Procédé pour la fabrication de multifilaments, monofilaments, et flocs résistants à la chaleur et à la lumière, pour usages textiles et industriels, contenant 0,2-0,5 % en masse d'un absorbant d'UV, mesuré sur le filament fini, **caractérisé en ce que** l'absorbant d'UV est, dans une première étape du procédé, mélangé à froid avec une poudre de polyester, le cas échéant simultanément avec un colorant, puis que, dans une seconde étape du procédé, 1-100 % en masse de ce mélange est dosé avec 0-99 % en masse de granulé polyester dans la zone d'insertion froide d'une machine d'extrusion à double vis puis fondu, malaxé, homogénéisé, et enfin que les câbles de polymère refroidis dans l'eau sont découpés, de sorte que l'absorbant d'UV se retrouve fixé dans le substrat.